# EUROPEAN PATENT SPECIFICATION

(11) **EP 2 688 842 B1**
(45) Date of publication and mention of the grant of the patent: **26.08.2015**
(21) Application number: 12764036.5
(22) Date of filing: 26.03.2012
(51) Int. Cl.: C01G 53/06

(54) **PROCESS FOR PRODUCTION OF NICKEL CARBONATE"**
VERFAHREN ZUR HERSTELLUNG VON NICKELCARBONAT
PROCÉDÉ POUR LA PRODUCTION DE CARBONATE DE NICKEL

(30) Priority: 25.03.2011 US 201161467683 P
(43) Date of publication of application: 29.01.2014
(73) Proprietor: Vale S.A., Cep: 20030-000 Rio de Janeiro - RJ (BR)
(72) Inventor: BERNI, Tiago Valentim, 30140-131 - Belo Horizonte, MG (BR); PEREIRA, Antonio Clareti, 31110-700 - Belo Horizonte, MG (BR); GUIMARÃES, Felipe Hilario, 33350-000 São José da Lapa, MG (BR)
(74) Representative: EP&C
(86) International application number: PCT/BR2012/000091
(87) International publication number: WO 2012/129628

(56) References cited:
- JP-A- 2 172 829
- JP-A- 61 106 422
- US-A- 3 350 167

## Description

### FIELD OF THE INVENTION

The present invention refers to a process for production of nickel carbonate from magnesium bicarbonate comprising steps that considers the recycling of the reagent used for producing nickel carbonate. Also, this process yields a final product that is easy to handle and transport. This process is particularly suitable for Mining Industry.

### BACKGROUND OF THE INVENTION

The nickel carbonate is a light green powder, odorless solid, dissolve in dilute acid and aqueous ammonia, but not in water and, which, upon drying, ranges in size from a fine powder to agglomerated hard lumps. This compound is mainly used to manufacture other nickel salts, nickel catalysts, pigments and additive of ceramics.

There are some known processes for preparation nickel carbonate form different sources. For instance, JPS61106422 concerns the production of high-purity basic nickel carbonate. Purpose of this prior art document is to obtain nickel carbonate by adding an alkali hydroxide to the product obtained by bringing an aqueous alkali carbonate solution and aqueous NiS04 solution into reaction under specific conditions then filtering the precipitate and subjecting such precipitate to repulp cleaning. In US3350167 a process for producing nickel carbonate in fine crystalline form having fast filtering and washing characteristics is described, which comprises reacting a water-soluble nickel salt with an alkali metal hydrogen carbonate in an agitated aqueous medium at a temperature ranging from about 27 to about 49°C and recovering the carbonate. JPH02172829 concerns the production of nickel carbonate or nickel oxide. It describes a process where sodium hydroxide (NaOH) and CO2 gas are contacted in a packed column to form sodium carbonate. However, such paths do not consider recycling of reagent and a precipitation step.

### DETAILED DESCRIPTION OF THE INVENTION

The following detailed description does not intend to, in any way, limit the scope, applicability or configuration of the invention. More exactly, the following description provides the necessary understanding for implementing the exemplary modalities. When using the teachings provided herein, those skilled in the art will recognize suitable alternatives that can be used, without extrapolating the scope of the present invention.

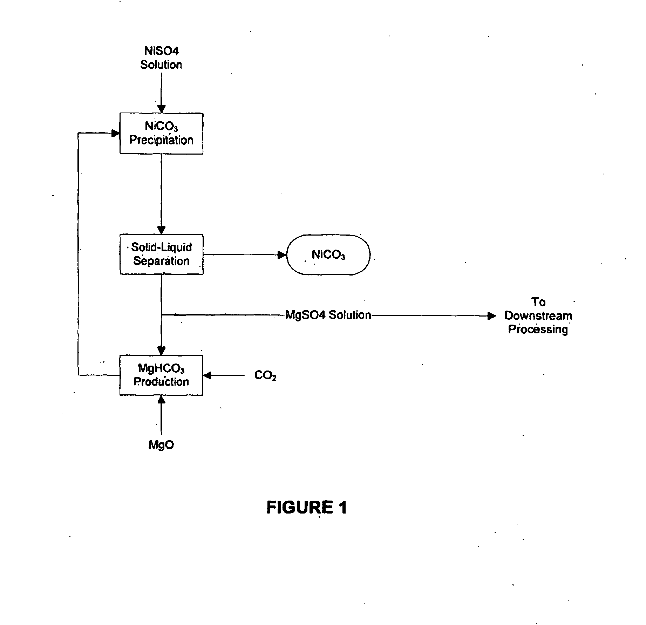

The process of the present invention, as shown on figure 1, comprises the following steps:
a) Preparing a magnesium salt solution;
b) Contacting said solution with a stream of gaseous CO₂, keeping pH between 4 and 10 and temperature between 0 and 100°C, during up to 5 hours;
c) Contacting the mixture of step b) with a nickel sulphate solution, producing a mixture;
d) Performing a separation of liquid and solid portions of said mixture;
e) Feeding step a) with said liquid portion.

The magnesium salt solution is preferably a magnesium sulphate solution.

In order to favor gas-liquid gas contact, the contact of said solution with a stream of gaseous CO₂ preferably occurs in a packet column can be used or any other equipment that provides good contact between said solution and the stream of gaseous CO₂.

And the magnesium salt solution pH must be kept between 4 and 10, preferably 5 and 7. In this case, a neutralizing agent can be used, preferably a magnesium oxide. But any other one can be used as known by a person skilled on the art for this purpose.

The temperature must be kept between 0 and 10°C, preferably 10 and 30°C, since lower temperatures favor the production of MgHCO₃.

And the residence times must be ut to five hours, preferably up to one hour.

The MgHCO₃ solution resulting from the contacting said solution with a stream of gaseous CO₂, preferably respecting the operation parameters here described, is contacted with a nickel sulphate, producing a mixture containing liquid and solid portions, MgSO₄ solution and NiCO₃ precipitation, respectively.

The liquid and solid portions must be separated by any equipment or method capable of perform a solid-liquid separation.

The liquid portion, being a bleed of that MgSO₄ solution, is sent back to step a) for producing more MgHCO₃.

The process for obtaining nickel carbonate of the present invention provides some benefits that follow:
- This process recycles the reagent used for producing nickel carbonate and yields a final product that is easy to handle and transport.
- Production of a cheap, easy to handle and transport, intermediate nickel product (NiCO₃);
- Increase synergies with other areas within Vale;
- Reduces costs of downstream processing of nickel;
- Exploit low-grade or small nickel deposits.

## Claims

1. Process for production of nickel carbonate comprising the following steps:
a) Preparing a magnesium salt solution;
b) Contacting said solution with a stream of gaseous CO₂, keeping pH between 4 and 10 and temperature between 0 and 100°C, during up to 5 hours;
c) Contacting the mixture of step b) with a nickel sulphate solution, producing a mixture;
d) Performing a separation of liquid and solid portions of said mixture;
e) Feeding step a) with said liquid portion.

2. Process according to claim 1, wherein the magnesium salt solution is a magnesium sulphate solution.

3. Process according to claim 1 or 2, wherein the contact of the magnesium salt solution with a stream of gaseous CO₂ occurs in a packed column.

4. Process according to claim 1, 2 or 3, wherein a neutralizing agent can be used in step b to keep pH between 4 and 10.

5. Process according to claim 4, wherein the neutralizing agent is magnesium oxide

## Patentansprüche

1. Verfahren zur Herstellung von Nickelcarbonat umfassend die folgenden Schritte:
a) Herstellen einer Magnesiumsalzlösung;
b) Inkontaktbringen der Lösung mit einem Strom von gasförmigem CO₂, wobei der pH zwischen 4 und 10 und die Temperatur zwischen 0 und 100°C gehalten wird, während bis zu 5 Stunden;
c) Inkontaktbringen der Mischung von Schritt b) mit einer Nickelsulfatlösung, wobei eine Mischung hergestellt wird;
d) Durchführen einer Trennung von flüssigen und festen Anteilen der Mischung;
e) Zuführen des flüssigen Anteils zu Schritt a).

2. Verfahren nach Anspruch 1, wobei die Magnesiumsalzlösung eine Magnesiumsulfatlösung ist.

3. Verfahren nach Anspruch 1 oder 2, wobei der Kontakt der Magnesiumsalzlösung mit einem Strom von gasförmigem CO₂ in einer Füllkörperkolonne erfolgt.

4. Verfahren nach Anspruch 1, 2 oder 3, wobei ein Neutralisationsmittel in Schritt b) verwendet werden kann, um den pH zwischen 4 und 10 zu halten.

5. Verfahren nach Anspruch 4, wobei das Neutralisationsmittel Magnesiumoxid ist.

## Revendications

1. Procédé pour la production de carbonate de nickel comprenant les étapes suivantes :
a) la préparation d'une solution de sel de magnésium :
b) la mise en contact de ladite solution avec un flux de CO₂ gazeux, en maintenant le pH entre 4 et 10 et la température entre 0 et 100°C, pendant une durée pouvant atteindre 5 heures ;
c) la mise en contact du mélange de l'étape b) avec une solution de sulfate de nickel, en produisant un mélange ;
d) la réalisation d'une séparation de portions liquides et solides dudit mélange ;
e) l'ajout à l'étape a) de ladite portion liquide.

2. Procédé selon la revendication 1, dans lequel la solution de sel de magnésium est une solution de sulfate de magnésium.

3. Procédé selon la revendication 1 ou 2, dans lequel le contact de la solution de sel de magnésium avec un flux de CO₂ gazeux se produit dans une colonne à garnissage.

4. Procédé selon la revendication 1, 2 ou 3, dans lequel un agent de neutralisation peut être utilisé à l'étape b pour maintenir le pH entre 4 et 10.

5. Procédé selon la revendication 4, dans lequel l'agent neutralisant est de l'oxyde de magnésium.
